# EUROPÄISCHE PATENTSCHRIFT

(11) **EP 1 323 007 B1**
(45) Veröffentlichungstag und Bekanntmachung des Hinweises auf die Patenterteilung: **09.11.2005**
(21) Anmeldenummer: 01982225.3
(22) Anmeldetag: 30.08.2001
(51) Int. Cl.: G05B 19/19

(54) **OPTIMIERUNGSVERFAHREN ZUR REGELUNG DES BETRIEBSZUSTANDES EINER GEFÜHRTEN WERKZEUGMASCHINE MIT EINEM ROTIERENDEN UND SCHLAG-BEAUFSCHLAGTEN WERKZEUG WÄHREND EINES BOHRVORGANGES**
OPTIMISING METHOD FOR REGULATING THE OPERATING STATE OF A GUIDED MACHINE TOOL COMPRISING A ROTATING PERCUSSION TOOL DURING A BORING PROCESS
PROCEDE D'OPTIMISATION DU REGLAGE DE L'ETAT DE FONCTIONNEMENT D'UNE MACHINE-OUTIL ENTRAINEE DOTEE D'UN OUTIL ROTATIF A PERCUSSION PENDANT UN PROCESSUS DE PER AGE

(30) Priorität: 01.09.2000 GB 0021368; 01.08.2001 DE 10137736
(43) Veröffentlichungstag der Anmeldung: 02.07.2003
(73) Patentinhaber: Fraunhofer-Gesellschaft zur Förderung der angewandten Forschung e.V., 80686 München (DE); Black & Decker Inc., Newark, DE 19711 (US)
(72) Erfinder: KUNTZE, Helge-Björn, 76297 Stutensee (DE); JACUBASCH, Andreas, 68789 St. Leon-Rot (DE); FREY, Christian, 76131 Karlsruhe (DE); PLIETSCH, Reinhard, 65611 Brechen (DE)
(74) Vertreter: Rösler, Uwe
(86) Internationale Anmeldenummer: PCT/EP2001/010018
(87) Internationale Veröffentlichungsnummer: WO 2002/019048

(56) Entgegenhaltungen:
- DE-A- 3 142 740
- DE-A- 4 406 723
- US-A- 4 550 277
- PATENT ABSTRACTS OF JAPAN vol. 018, no. 352 (M-1631), 4. Juli 1994 (1994-07-04) & JP 06 088478 A (FUJITA CORP), 29. März 1994 (1994-03-29)
- CHANG T C ET AL: "The fuzzy-nets based approach in optimization of machining processes" INDUSTRIAL ELECTRONICS, CONTROL, AND INSTRUMENTATION, 1995., PROCEEDINGS OF THE 1995 IEEE IECON 21ST INTERNATIONAL CONFERENCE ON ORLANDO, FL, USA 6-10 NOV. 1995, NEW YORK, NY, USA,IEEE, US, 6. November 1995 (1995-11-06), Seiten 1395-1399, XP010154926 ISBN: 0-7803-3026-9
- HSU P-L ET AL: "FUZZY ADAPTIVE CONTROL OF MACHINING PROCESSES WITH A SELF-LEARNING ALGORITHM" TRANSACTIONS OF THE AMERICAN SOCIETY OF MECHANICAL ENGINEERS, SERIES B: JOURNAL OF ENGINEERING FOR INDUSTRY, ASME. NEW YORK, US, Bd. 118, Nr. 4, 1. November 1996 (1996-11-01), Seiten 522-530, XP000635780 ISSN: 0022-0817
- HSIN-TAN CHIU ET AL: "TRAINABLE NEURAL NETWORK FOR MECHANICALLY FLEXIBLE SYSTEMS BASED ONNONLINEAR FILTERING" JOURNAL OF GUIDANCE AND CONTROL AND DYNAMICS, AIAA. NEW YORK, US, Bd. 18, Nr. 3, 1. Mai 1995 (1995-05-01), Seiten 503-507, XP000543086 ISSN: 0731-5090

## Beschreibung

### Technisches Gebiet

Die Erfindung bezieht sich ein Optimierungsverfahren zur Regelung des Betriebszustandes einer manuell geführten Handwerkzeugmaschine mit einem, mit einer Drehzahl rotierenden und mit einer Schlagfrequenz Schlag-beaufschlagten Werkzeug während eines Bohrvorganges, bei dem das Werkzeug zusätzlich kraftbeaufschlagt in einen, aus einem gegebenen Material bestehenden Gegenstand hineingetrieben wird.

### Stand der Technik

Handwerkzeugmaschinen der vorstehend genannten Art betreffen insbesondere Schlagbohrmaschinen, die über einen als Bohrfutter ausgebildeten Befestigungsmechanismus verfügen, in den ein Bohrwerkzeug lösbar-fest einsetzbar ist, das in Rotation versetzbar ist und überdies mit impulsartigen, mechanisch induzierten Schlägen in Längsrichtung des Bohrwerkzeuges beaufschlagt wird. In den meisten Fällen weisen Schlagbohrmaschinen einen einzigen Antriebsmotor auf, der sowohl für den Drehantrieb des Bohrers als auch für den Schlagantrieb mit Hilfe eines geeigneten Getriebewerkes dient. Derartige Schlagbohrmaschinen, die nur über einen einzigen Antriebsmotor verfügen, eignen sich jedoch nicht dazu, die Drehzahl sowie die Schlagfrequenz einzeln und unabhängig voneinander beliebig einzustellen. Eben diese Möglichkeit der unabhängigen Einstellung bezüglich Drehzahl und Schlagfrequenz ermöglicht grundsätzlich eine optimierte Anpassung beider Betriebsgrößen auf die aktuelle Bohr- bzw. Betriebssituation der Schlagbohrmaschine, die durch die gewählte Bohrerart sowie die zu bearbeitende Material- bzw. Gesteinshärte im wesentlichen beeinflusst wird.

Ziel einer jeden Bohrung ist es einen Bohrverlauf mit minimaler Führungs- sowie minimaler Rückschlagkraft bei einer maximal erzielbaren Bohrgeschwindigkeit zu erhalten.

Der DE 31 42 740 A1 ist eine Schlagbohrmaschine zu entnehmen, bei der die vom Bohrer ausgeführten Dreh- und Schlagbewegungen durch zwei getrennte Antriebsorgane realisiert werden. Die beiden Antriebsorgane sind unabhängig voneinander regel- bzw. steuerbar, so dass die Einstellung der Drehzahl eines Bohrers unabhängig von der Einstellung der Schlagfrequenz erfolgt. Die Regelung der Schlagfrequenz und der Drehzahl wird mittels Knebel und Griffe am Gehäuse vorgenommen, erfolgt also rein manuell.

Aus der JP 06088478 ist eine Tunnelvortriebsmaschine zu entnehmen, bei der ein Überwachungsverfahren zum Einsatz kommt, durch das der Hydraulikantrieb der Tunnelvortriebsmaschine geregelt wird, während die Umdrehungsgeschwindigkeit des Bohrkopfes der Tunnelbohrmaschine sensoriell überwacht wird. Neben der sensoriellen Erfassung der Bohr- bzw. Rotationsgeschwindigkeit des Bohrkopfes werden überdies eine Reihe weiterer Betriebsparameter sensoriell erfasst, nämlich die elektrische Leistung zum Betrieb des Bohrkopfes, die Anpresskraft, mit der der Bohrkopf gegen das abzutragende Material gepresst wird, den Vorschub des Bohrkopfes, die Dichte des abgetragenen Materials sowie die Rotationsgeschwindigkeit des Bohrkopfes.

In der EP 0 825 329 A2 ist ein Bohrgerät mit einer Vorschubsteuereinheit beschrieben, das gleichsam der vorstehenden Tunnelbohrmaschine dem Erzeugen von Bohrlöchern im Erdreich dient, dessen Bohrwerkzeug vermittels eines Vorschubmotors in das Erdreich vorgetrieben wird. Hierbei wird das Bohrgerät mit einer definierten Andruckkraft bzw. Vorschubkraft gegen das Erdreich getrieben. Sämtliche Regelgrößen, wie bspw. die Werkzeugdrehzahl, die Vorschubgeschwindigkeit sowie die Vorschubkraft können unmittelbar erfasst und entsprechend gesteuert werden.

Grundsätzlich liegt jedoch bei einem manuell durchgeführten Bohrvorgang ein mechanisches Mehrkörpersystem zugrunde, bestehend aus einem die Schlagbohrmaschine haltenden und führenden Menschen, der Schlagbohrmaschine selbst sowie dem zu bearbeitenden Gestein bzw. Material. Alle drei Komponenten stehen zueinander in Wirkverbindung, die im Wesentlichen durch die Drehzahl sowie die Schlagfrequenz der Schlagbohrmaschine geprägt ist. Werden Änderungen am Bohrwerkzeug vorgenommen oder treten Änderungen an dem mit der Schlagbohrmaschine zu bearbeitenden Gegenstand auf, so führen diese Änderungen unvermeidbar zu einer Verstimmung des vorstehend charakterisierten Dreikörpersystems, was sich in aller Regel nachteilhaft auf den gesamten Bohrverlauf auswirkt.

### Darstellung der Erfindung

Der Erfindung liegt die Aufgabe zugrunde, ein Optimierungsverfahren zur Regelung des Betriebszustandes einer manuell geführten Handwerkzeugmaschine, vorzugsweise einer Schlagbohrmaschine mit einem, mit einer Drehzahl rotierenden und mit einer Schlagfrequenz Schlag-beaufschlagten Werkzeug, vorzugsweise Bohrwerkzeug, während eines Bohrvorganges, bei dem das Bohrwerkzeug zusätzlich kraftbeaufschlagt in einen, aus einem Material bestehenden Gegenstand hineingetrieben wird, derart anzugeben, dass während des Bohrvorganges, vorzugsweise während des gesamten Bohrvorganges, für einen optimalen Bohrverlauf gesorgt wird, selbst bei sich während des Bohrverlaufes ändernden Bohrbedingungen, wie bspw. Änderung der Materialhärte des zu bohrenden Gegenstandes. Das Optimierungsverfahren soll insbesondere eine individuelle Abstimmung zwischen Drehzahl und Schlagfrequenz ermöglichen, mit der das Bohrwerkzeug in einen Gegenstand hineingetrieben wird.

Die Lösung der der Erfindung zugrundeliegenden Aufgabe ist im Anspruch 1 angegeben. Vorteilhafte Merkmale zur Weiterbildung des Erfindungsgedankens sind Gegenstand der Unteransprüche sowie der Erfindungsbeschreibung zu entnehmen. Gegenstand des Anspruches 14 ist eine lösungsgemäße Vorrichtung.

Erfindungsgemäß weist das Optimierungsverfahren zur Regelung des Betriebszustandes einer manuell geführten Handwerkzeugmaschine, vorzugsweise einer Schlagbohrmaschine, mit einem, mit einer Drehzahl rotierenden und mit einer Schlagfrequenz Schlag-beaufschlagten Werkzeug während eines Bohrvorganges, bei dem das Werkzeug zusätzlich kraftbeaufschlagt in einen, aus einem gegebenen Material bestehenden Gegenstand hineingetrieben wird, folgende Verfahrensschritte auf:

Zunächst werden den Ist-Betriebszustand der Werkzeugmaschine charakterisierende Parameter, nämlich die Drehzahl, die Schlagfrequenz, eine Längs- und Querbeschleunigung in Bezug auf das Werkzeug sowie eine von der Handwerkzeugmaschine aufgenommene elektrische Leistung, mittels Sensoren in Form von Sensorsignalen, sensoriell in Form von Messsignalen erfasst. Diese Messsignale werden anschließend einer lernfähigen Prozessanalyse zugeführt, durch die aus den Messsignalen jedes einzelnen Sensors relevante Signalmerkmale, sogenannte parameterspezifische, relevante Merkmale, gewonnen werden. Eben jene parameterspezifischen, relevanten Merkmale werden nachfolgend im Rahmen eines logischen Entscheidungsprozesses zum Erhalt einer den Ist-Betriebszustand charakterisierenden Information ausgewertet. Diese den Ist-Betriebszustand charakterisierende Information enthält unter anderem eine Information über das aktuell eingesetzte Bohrwerkzeug sowie eine Information über das aktuell bearbeitete Material, insbesondere die Materialhärte bspw. eines Gesteins.
In Kenntnis dieser den Ist-Betriebszustand charakterisierenden Information wird nun eine gezielte Auswahl von bekannten, den Betriebszustand beschreibenden Referenzdaten getroffen. Diese Referenzdaten stehen bspw. in Form nicht linearer Kennlinienfelder als Funktion von Drehzahl und Schlagfrequenz zur Verfügung und sind durch empirische Versuchsreihen mit unterschiedlichen Bohrwerkzeugen an unterschiedlichen zu bearbeitenden Materialien unter Massgabe eines festgelegten Gütekriteriums ermittelt worden. Als Gütekriterien können bspw. die Forderungen dienen, ein Bohrloch in möglichst kurzer Zeit bei minimalem Energieaufwand, oder ein Bohrloch in möglichst kurzer Zeit und Außerachtlassung des Energieeinsatzes zu erzielen. Schließlich wird ein durch Drehzahl und Schlagfrequenz definierter optimaler Arbeitspunkt für die Schlagbohrmaschine durch Vergleich der den Ist-Betriebszustand charakterisierenden Information mit den ausgewählten Referenzdaten ermittelt und bei einer festgestellten Abweichung zwischen der aktuellen Drehzahl und Schlagfrequenz zu dem ermittelten optimalen Arbeitspunkt eine entsprechende Nachregelung durchgeführt.

In besonderer Weise eignet sich die Verwendung von Fuzzy-basierten oder Neuro-Fuzzy-basierten Methoden, sowohl zur Durchführung der lernfähigen Prozessanalyse zum Erhalt der parameterspezifischen, relevanten Informationen als auch bei der Durchführung des logischen Entscheidungsprozesses zum Erhalt einer den Ist-Betriebszustand charakterisierenden Information.

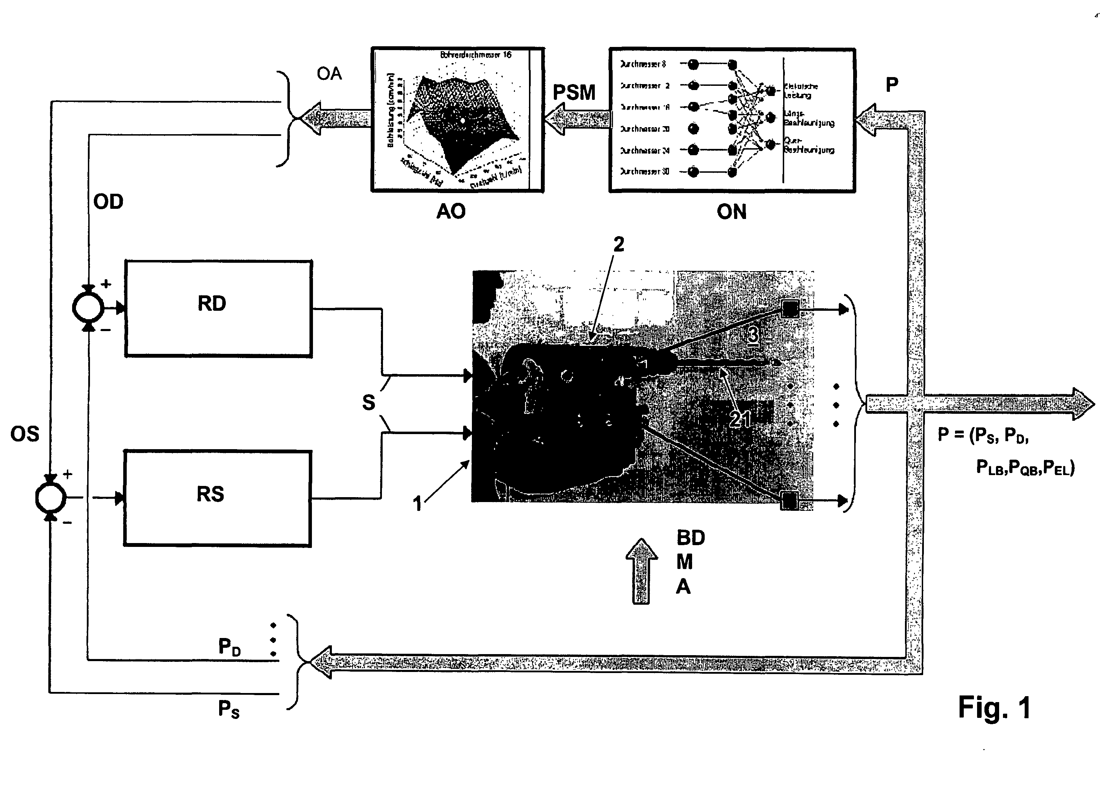

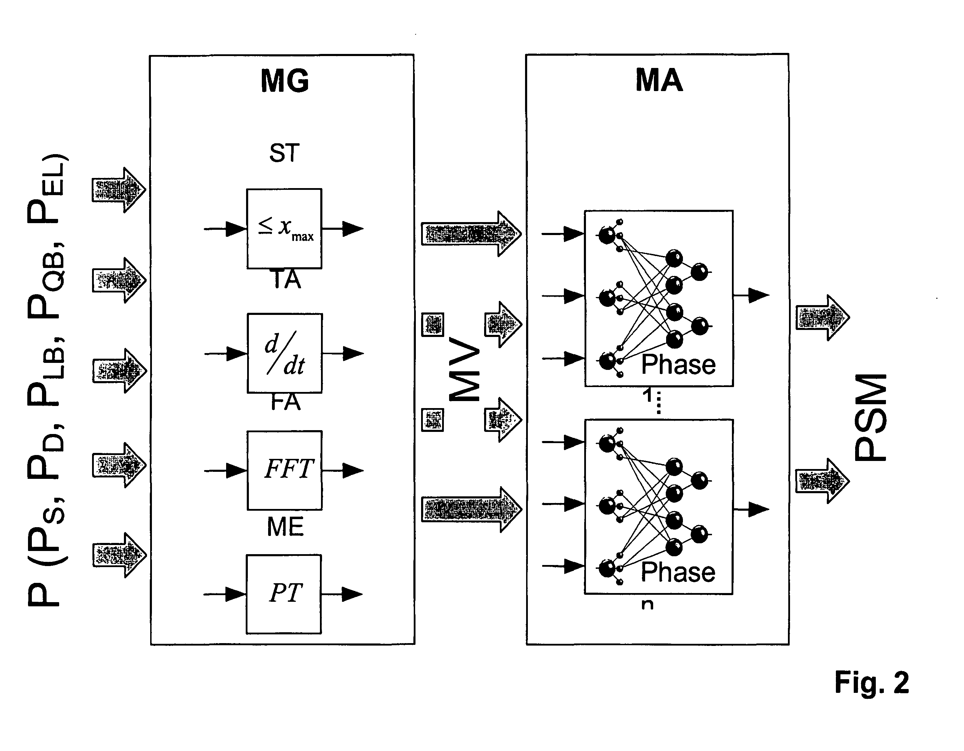

Das erfindungsgemäße Optimierungsverfahren soll anhand der Figuren 1 und 2, die jeweils dem erfindungsgemäßen Optimierungsverfahren zugrundeliegende Prozessschemata zeigen, näher erläutert werden.

In Fig. 1 ist eine Bohrsituation dargestellt (zentrales Bild), in der eine Person 1 mit Hilfe einer Schlagbohrmaschine 2 einen Bohrvorgang an einer Wand 3 durchführt. In bevorzugter Weise, weist die Schlagbohrmaschine 2 zwei getrennte Antriebe auf, von denen einer das Bohrwerkzeug 21 in Rotation versetzt und der andere Antrieb, vorzugsweise unter Verwendung eines Exzentermechanismus, das Bohrwerkzeug 21 in Bohrrichtung (siehe Pfeil) mit impulsartigen Schlägen beaufschlagt, wodurch der Bohrfortschritt in Bohrrichtung begünstigt wird. Somit sind beide Antriebe getrennt voneinander einstellbar und auch regelbar.

Ausgehend von der vorstehend in Fig. 1 bildlich dargestellten, beschriebenen Bohrsituation, werden in einem ersten Schritt den Ist-Betriebszustand der Schlagbohrmaschine charakterisierende Parameter P erfasst. Dies erfolgt unter Verwendung geeigneter Messsensoren, die am bzw. in der Schlagbohrmaschine jeweils an einem geeigneten Ort befestigt sind und zur Messung von Beschleunigungen, am Gerät angreifenden Kräften, elektrischen Strömen, Geschwindigkeiten etc. geeignet sind.

Dies betrifft insbesondere das Vorsehen von Sensoren, mit denen unter anderem die Schlagfrequenz P_{S}, die Drehzahl P_{D}, die Längs- sowie Quer-Beschleunigung P_{LB}, P_{QB}, die jeweils auf das Bohrwerkzeug 21 respektive die Schlagbohrmaschine 2 einwirken sowie die von der Bohrmaschine 2 aufgenommene elektrische Leistung P_{EL} messbar sind.

Ausgehend von den sensoriell ermittelten, den Ist-Betriebszustand der Schlagbohrmaschine charakterisierenden Parametern P, d.h. P_{S}, P_{D}, P_{LB}, P_{QB}, P_{EL}, wird auf der Grundlage dieser Parameter P eine lernfähige -Online-Diagnose ON durchgeführt, deren Ziel es ist, den aktuellen Betriebszustand der Schlagbohrmaschine während des Bohrvorganges zu ermitteln und anzugeben, wobei eine Aussage darüber getroffen werden soll, welche Art von Bohrer BD und welcher Materialtyp M aktuell eingesetzt bzw. bearbeitet wird. Grundsätzlich ist die Wahl bzw. Vorgabe über Bohrertyp BD sowie der Gesteins-, bzw. Materialtyp M als Eingabe- oder auch gegebene Zustandsgrößen anzusehen, nach denen sich der Bohrverlauf jeweils ergibt. Auch ist der aktuelle Anpressdruck A, mit der die Schlagbohrmaschine gegen die Wand 3 gedrückt wird, anteilsmäßig am Bohrerfolg verantwortlich. Vorzugsweise gilt es auch die Eingabegröße A als Ergebnis der lernfähigen -Online-Diagnose zu erhalten.

Im Einzelnen erfolgt die lernfähige Online-Diagnose ON in zwei aufeinanderfolgenden Schritten, die im Einzelnen in Figur 2 dargestellt sind, derart, dass in einem ersten Schritt MG die als Sensorsignale vorliegenden, den Ist-Betriebszustand der Schlagbohrmaschine charakterisierenden Parameter P einer lernfähigen Prozessanalyse im Rahmen einer Merkmalsgenerierung MG zugeführt werden, bei der die einzelnen als Sensorsignale vorliegenden Parameter P einem signal-, modell- und/oder wissensgestützten Verfahren als Eingangsdaten zur Verfügung gestellt werden, wobei aus diesen jeweils relevante Signalcharakteristika extrahiert werden, bspw. unter Verwendung eines Schwellwerttestes ST, einer Trendanalyse TA, Frequenzanalyse FA und/oder einer Mustererkennung ME, die schließlich in einem Merkmalsvektor MV, der über eine geringere Dimensionalität bzw. einen geringeren Datenumfang, als die bzw. den der eingangs zur Verfügung stehenden Sensorsignale P verfügt, zusammengefasst werden.

Bei der zum Erhalt parameterspezifischen, relevanter Merkmale eingesetzten lernfähigen Prozessanalyse eignen sich bevorzugt sog. signalgestützte Verfahren, wie bspw. Fuzzy-basierte Grenzwert-, Trend- und Spektral- bzw. Waveletanalysen. Auch können modellgestützte Verfahren, wie bspw. das Kalman-Filter oder wissensgestützte Verfahren, sog. Expertensysteme zur lernfähigen Prozessanalyse eingesetzt werden.

Der mit Hilfe wenigstens eines der vorstehend genannten Verfahren gewonnene Merkmalsvektor MV wird in einem zweiten Verfahrensschritt MA (Merkmalsanalyse) innerhalb der Online-Diagnose ON einem logischen Entscheidungsprozess zugeführt, bei dem quantitative Größen in qualitative Ausdrücke transformiert werden. Hierzu werden merkmalsbasierte Mustererkennungsmethoden auf der Grundlage von Fuzzy-Logik und neuronalen Netzen eingesetzt. Derartige Neuro-Fuzzy-basierte Methoden erlauben die Beschreibung von technischen Zustandsgrößen mit nichtexakten linguistischen qualitativen Informationen, so dass es dennoch möglich ist, trotz nicht exakt bestimmter Eingangswerte eine klare und präzise Aussage über die Wahrscheinlichkeit darüber anzugeben, mit der sich die Schlagbohrmaschine in einem konkreten Ist-Betriebszustand befindet, d.h. mit welcher Art von Bohrwerkzeug eine bestimmte Art von Material bearbeitet wird. Zudem ist es möglich, heuristisches Expertenwissen in den logischen Entscheidungsprozess einfließen zu lassen.

Durch die bereits vorstehend erwähnte Transformation der einzelnen Sensorsignale P bzw. Signalmerkmale MV in unscharfe linguistische Variablen (Fuzzyfizierung) eröffnet sich darüber hinaus eine attraktive Möglichkeit physikalisch völlig unterschiedliche kontinuierlich oder diskret wirkende Sensoren zu einem Multisensorsystem zu integrieren.

Mit Hilfe eines auf einer Neuro-Fuzzy-basierten Methode beruhenden logischen Entscheidungsprozesses wird schließlich eine den Ist-Betriebszustand der Schlagbohrmaschine charakterisierende Information PSM erhalten, die unter anderem eine konkrete Aussage bezüglich des aktuell verwendeten Bohrwerkzeuges BD, der aktuell bearbeiteten Materialhärte M sowie vorzugsweise auch die aktuell herrschende Andruckkraft A beinhaltet, mit der ein Bediener die Schlagbohrmaschine gegen die zu bearbeitende Wand 3 drückt. Auch ist es möglich, aus der auf vorstehende Weise ermittelten Information die Eindringtiefe abzuleiten, mit der das Bohrwerkzeug in den zu bearbeitenden Gegenstand aktuell eindringt.

Mit Hilfe der Neuro-Fuzzy-basierten Merkmalsauswertung während der online-Diagnose ON ist somit die Schlagbohrmaschine in die Lage versetzt, ihren momentanen Betriebszustand eigenständig zu erkennen.

Um jedoch überprüfen zu können, ob die Schlagbohrmaschine an ihrem optimalen Arbeitspunkt arbeitet, der durch eine optimale Schlagfrequenz sowie optimale Drehzahl definiert ist, bedarf es eines vorab Vergleiches zwischen der den Ist-Betriebszustand charakterisierenden Information PSM, der tatsächlich aktuell messtechnisch erfassten Drehzahl PD und speziell ausgewählten Referenzdaten RD, die aus einem vorliegenden Fundus unter Maßgabe bestimmter Kriterien auszuwählen sind.

So sind durch systematische Versuchsreihen mit allen verfügbaren Bohrerwerkzeugen sowie Materialtypen eine Vielzahl nichtlinearer Kennlinienfelder experimentell zu ermitteln und in geeigneter Form für jeden Bohrer- und Gesteinstyp abzuspeichem. Die einzelnen Kennlinienfelder werden als nichtlineare Kennlinienfelder in Abhängigkeit von Schlagfrequenz und Drehzahl aufgezeichnet und entsprechend abgespeichert. Die als Referenzdaten RD dienenden Kennlinienfelder können vorzugsweise als Look-up-tables vorliegen.

Aus der Vielzahl der vorrätigen Kennlinienfelder wird für eine konkrete Bohrkonstellation eben jenes Kennlinienfeld ausgewählt und als Referenzdaten RD verwendet, das dem aktuellen ermittelten Bohrwerkzeug sowie der Materialart des zu bearbeitenden Gegenstandes entspricht.

Um im Weiteren den optimalen Arbeitspunkt möglichst exakt zu ermitteln, mit dem die Schlagbohrmaschine hinsichtlich Drehzahl und Schlagfrequenz arbeitet, wird die vorstehend gewonnene, den Ist-Betriebszustand charakterisierende Information PSM mit den als Kennlinienfeld vorliegenden Referenzdaten RD im Rahmen einer der Online-Diagnose ON nachgeschalteten Arbeitspunktoptimierungsstufe AO verglichen (siehe Fig. 1). Der der Optimierung dienende Vergleich beinhaltet eine Minimal- bzw. Maximalwertbildung des Kennlinienfeldes auf der Grundlage geeigneter Such- bzw. Optimierungsalgorithmen, deren Ergebnis schließlich eine optimale Schlagfrequenz sowie optimale Drehzahl darstellt. Siehe hierzu insbesondere den Beitrag von Coleman Th., Branch, M.-A. and Grace, A.: "Optimization Toolbox for use with MATLAB", User's guide , version 2, The Math Works Inc. 24 Prime Park Way, natick, MA 01760-1500 (USA), 1999.

Mit Hilfe des in vorstehender Weise ermittelten optimalen Arbeitspunktes OA werden die optimale Schlagfrequenz OS sowie die optimale Drehzahl OD mit den tatsächlich gemessenen, aktuell vorliegenden Sensorsignalen bezüglich Schlagfrequenz P_{S} und Drehzahl P_{D} verglichen, dies erfolgt am einfachsten durch entsprechende Differenzbildung zwischen den Optimalwerten OS und OD mit den jeweils gemessenen Signalen P_{S} und P_{D}. Bei einer feststellbaren Abweichung unter beiden Vergleichspaaren werden die Schlagfrequenz bzw. die Drehzahl über ein entsprechendes Regelelement R_{D}, R_{S}, die Drehzahl bzw. Schlagfrequenz betreffend und einem nachfolgenden Stellglied S nachgeregelt.

Das erfindungsgemäße Optimierungsverfahren lässt sich ohne weitere Vorkehrungen bei einer Schlagbohrmaschine mit zwei getrennt ansteuerbaren elektrischen Antrieben realisieren, bei denen jede beliebige optimale Schlagfrequenz bzw. Drehzahl eingestellt und in beiden Antriebsregelungen als Sollwerte aufgeschaltet werden kann.

Es sind jedoch auch Schlagbohrmaschinen mit nur einem Antrieb bekannt, bei denen ein mehrstufiges Getriebe für die Entkopplung der Drehzahl sowie der Schlagfrequenz dient, so dass der optimale Arbeitspunkt durch jeweils eine Solldrehzahl und eine Getriebestufe eingestellt werden kann, wobei die optimale Getriebestufe im Gegensatz zur kontinuierlichen Drehzahleinstellung möglichst diskret einstellbar ist.

Bei Schlagbohrmaschinen mit nur einem Antrieb und einem stufenlosen PIV-Getriebe ist es möglich den optimalen Arbeitspunkt durch jeweils eine Solldrehzahl und eine Getriebestufe kontinuierlich einzustellen.

Zusammenfassend kann zu dem erfindungsgemäßen Optimierungsverfahren festgehalten werden, dass durch eine multisensorielle Online-Prozessdiagnose während des Betriebes eines Schlagbohrgerätes, das stets mit dem optimalen Arbeitspunkt arbeiten soll, durch aktives Messen von Beschleunigungen, Kräften, Strömen und Geschwindigkeiten unter Verwendung Neuro-Fuzzy-basierter Analysemethoden Eingangsgrößen wie Bohrdurchmesser, Materialhärte und Andruckkraft ermittelt werden können. Die Schlagbohrmaschine wird somit in die Lage versetzt, seinen momentanen Betriebszustand zu erkennen, seinen Arbeitspunkt optimal darauf abzustimmen und dadurch ständig einen maximalen Bohrfortschritt zu liefern bzw. einem anderen Gütekriterium, wie bspw. minimaler Energieverbrauch oder minimale Armbelastung zu entsprechen. Natürlich werden dabei physikalische Randbedingungen, wie Energieverbrauch und Leistungsgrenzen des Hammerwerkes berücksichtigt.

Das erfindungsgemäße Optimierungsverfahren ist jedoch nicht nur auf eine in der vorstehenden Beschreibung dargestellte Schlagbohrmaschine begrenzt, sondern kann auch in anderen geführten, materialbearbeitenden Werkzeugmaschinen eingesetzt werden, wie beispielsweise in reinen Schlaghämmern oder Bohrgeräten, in denen jeweils nur eine Stellgröße, etwa Drehzahl oder Schlagfrequenz getrennt, optimal geregelt werden soll.

## Patentansprüche

1. Optimierungsverfahren zur Regelung des Betriebszustandes einer manuell geführten Handwerkzeugmaschine (2) mit einem, mit einer Drehzahl rotierenden und mit einer Schlagfrequenz Schlag-beaufschlagten Werkzeug (21) während eines Bohrvorganges, bei dem das Werkzeug (21) zusätzlich kraftbeaufschlagt in einen, aus einem gegebenen Material bestehenden Gegenstand (3) hineingetrieben wird, **gekennzeichnet durch** die Kombination der folgenden Verfahrensschritte:
- Erfassen von den Ist-Betriebszustand der Handwerkzeugmaschine (2) charakterisierenden Parametern, nämlich die Drehzahl (P_{D}), die Schlagfrequenz (P_{S}), eine Längs- und Querbeschleunigung (P_{LB}, P_{QB}) in Bezug auf das Werkzeug (21) sowie eine von der Handwerkzeugmaschine (2) aufgenommene elektrische Leistung (P_{EL}), mittels Sensoren in Form von Sensorsignalen,
- Durchführen einer lernfähigen Prozessanalyse auf der Basis der erfassten Parameter zum Erhalt parameterspezifischer, relevanter Merkmale,
- Auswerten der parameterspezifischen relevanten Merkmale im Rahmen eines logischen Entscheidungsprozesses zum Erhalt einer den Ist-Betriebszustand charakterisierenden Information (PSM), die eine Aussage über das Werkzeug (21), die Materialhärte (M) des bearbeiteten Gegenstandes (3) sowie die Andruckkraft (A) enthält, mit der die Handwerkzeugmaschine (2) in den Gegenstand (3) hineingetrieben wird,
- Auswahl von bekannten, den Betriebszustand beschreibenden Referenzdaten (RD) des eingesetzten Werkzeuges (21) sowie des Materials des zu bearbeitenden Gegenstandes (3) in Abhängigkeit eines vorgebbaren Gütekriteriums,
- Ermitteln eines **durch** Drehzahl (P_{D}) und Schlagfrequenz (P_{S}) bestimmbaren optimalen Arbeitspunktes (OA) für die Handwerkzeugmaschine (2) **durch** Vergleich der den Ist-Betriebszustand charakterisierenden Information (PSM) mit den ausgewählten Referenzdaten (RD) und
- Regelung der Handwerkzeugmaschine (2) in Bezug auf Drehzahl und Schlagfrequenz auf der Grundlage des ermittelten optimalen Arbeitspunktes (OA).

2. Verfahren nach Anspruch 1,
**dadurch gekennzeichnet, dass** die manuell geführte Handwerkzeugmaschine (2) ein Bohrschlaghammer ist der durch wenigstens eine Motoreinheit dreh- und schlagangetrieben wird, und
dass das Werkzeug (21) ein Bohrer oder Bohrkopf ist.

3. Verfahren nach Anspruch 1 oder 2,
**dadurch gekennzeichnet, dass** bei der lernfähigen Prozessanalyse die erfassten Parameter (P), die als Sensorsignale vorliegen, mit einem signal-, modell- und/oder einem wissensgestützen Verfahren derart verarbeitet werden, dass die dabei gewonnenen parameterspezifischen relevanten Merkmale in einem Merkmalsvektor (MV) zusammengefasst werden.

4. Verfahren nach Anspruch 3,
**dadurch gekennzeichnet, dass** als signalgestütztes Verfahren eine Fuzzy-basierte Grenzwert- (ST), Trend- (TA) und/oder Spektral- oder Wavletanalysen eingesetzt wird.

5. Verfahren nach Anspruch 4,
**dadurch gekennzeichnet, dass** als modellgestütztes Verfahren ein Kalman-Filter eingesetzt wird.

6. Verfahren nach Anspruch 5,
**dadurch gekennzeichnet, dass** als wissensgestütze Verfahren ein Expertensystem eingesetzt wird.

7. Verfahren nach einem der Ansprüche 1 bis 6,
**dadurch gekennzeichnet, dass** die zu einem Merkmalsvektor (MV) zusammengefassten parameterspezifischen, relevanten Merkmale quantitative Größen darstellen, die durch den logischen Entscheidungsprozess in eine qualitative Information in Form eines linguistischen Ausdruckes transformiert werden, der den Ist-Betriebszustand charakterisiert.

8. Verfahren nach einem der Ansprüche 1 bis 7,
**dadurch gekennzeichnet, dass** für den logischen Entscheidungsprozess merkmalsbasierte Mustererkennungsmethoden eingesetzt werden, die auf der Grundlage einer Neuro-Fuzzy-Logik arbeiten.

9. Verfahren nach einem der Ansprüche 1 bis 8,
**dadurch gekennzeichnet, dass** die zur Auswahl zur Verfügung stehenden Referenzdaten (RD) in Form nicht linearer Kennlinienfelder als Funktion von Drehzahl und Schlagfrequenz durch empirische Versuchsreihen mit unterschiedlichen Werkzeugen an unterschiedlichen zu bearbeitenden Materialien unter Massgabe eines festgelegten Gütekriteriums ermittelt werden.

10. Verfahren nach Anspruch 9,
**dadurch gekennzeichnet, dass** als Gütekriterium maximaler Bohrfortschritt, maximale Bohrlochqualität, minimaler Energieverbrauch oder minimale mechanische Belastung für eine Bedienperson, die die Handwerkzeugmaschine führt, verwendet wird.

11. Verfahren nach einem der Ansprüche 1 bis 10,
**dadurch gekennzeichnet, dass** die Referenzdaten (RD) in Form von Lookup-Tables zur Verfügung stehen.

12. Verfahren nach einem der Ansprüche 1 bis 11,
**dadurch gekennzeichnet, dass** der Vergleich der den Ist-Betriebszustand charakterisierenden Information (PSM) mit den ausgewählten Referenzdaten (RD) zum Erhalt des optimalen Arbeitspunktes (OA) durch Minimal- bzw. Maximalwertbildung der als Kennlinienfeld vorliegenden Referenzdaten (RD) durchgeführt wird, bei dem Such- und Optimierungsalgorithmen angewendet werden.

13. Verfahren nach einem der Ansprüche 1 bis 12,
**dadurch gekennzeichnet, dass** die Regelung der manuell geführten Handwerkzeugmaschine (2) durch einen Vergleich der den Ist-Betriebszustand der Handwerkzeugmaschine (2) charakterisierenden, in Form von Sensorsignalen vorliegenden Parameter (P) bezüglich der Drehzahl (P_{D}) und Schlagfrequenz (P_{S}) mit dem optimierten Arbeitspunkt (OA), der durch eine Optimaldrehzahl sowie eine Optimalschlagfrequenz beschreibbar ist, durchgeführt wird, indem bei einer vorliegenden Abweichung die Drehzahl und die Schlagfrequenz der Handwerkzeugmaschine (2) in Bezug auf den optimierten Arbeitspunkt (OA) nachgeregelt wird.

14. Vorrichtung zur optimierten Regelung des Betriebszustandes einer manuell geführten Handwerkzeugmaschine (2), die nach dem Verfahren nach einem der Ansprüche 1 bis 13 arbeitet, mit einem, mit einer Drehzahl rotierenden und mit einer Schlagfrequenz Schlag-beaufschlagten Werkzeug (21), das kraftbeaufschlagt in einen, aus einem gegebenen Material bestehenden Gegenstand (3) hinein treibbar ist,
**dadurch gekennzeichnet, dass** Sensoren an der Handwerkzeugmaschine (2) vorgesehen sind, die die Drehzahl, die Schlagfrequenz, eine Längs-, Querbeschleunigung in Bezug auf das Werkzeug (21) und/oder eine von der Handwerkzeugmaschine (2) aufgenommene elektrische Leistung in Form von Sensorsignalen (P) erfassen,
- dass eine Auswerteeinheit vorgesehen ist, die die Sensorsignale unter Zugrundelegung eines signal-, modell- und/oder wissensgestützten Verfahrens auswertet und relevante Signalcharakteristika bereitstellt, und die die relevanten Signalcharakteristika unter Zugrundelegung eines logischen Entscheidungsprozesses derart analysiert, dass eine den Ist-Betriebszustand der Handwerkzeugmaschine (2) charakterisierende Information (PSM) erhältlich ist,
- dass eine Optimierungseinheit vorgesehen ist, die eine optimale Drehzahl sowie Schlagfrequenz auf Basis empirisch gewonnener Informationen und der den Ist-Betriebszustand der Handwerkzeugmaschine (2) charakterisierenden Information (PSM) ermittelt, und
- dass eine Vergleichs- und Regeleinheit vorgesehen ist, die bei Vorliegen einer Abweichung zwischen der erfassten Drehzahl und Schlagfrequenz und der ermittelten optimalen Drehzahl sowie Schlagfrequenz die Handwerkzeugmaschine (2) zum Erhalt eines optimierten Betriebszustandes nachregelt.

## Claims

1. An optimizing method for regulating the operating state of a manually guidable machine tool (2) having a percussion subjected tool (21) rotating at a rotational speed and subjected to a percussion frequency during a boring action, in which the tool (21), subjected in addition to a force, is driven into an object (3) consisting of a given material,
**characterized by** a combination of the following method steps:
- determination of the parameters, namely the rotational speed (P_{D}), the percussion frequency (P_{S}), the longitudinal acceleration and transverse acceleration (P_{LB},P_{QB}) the rotational speed in relation to the tool (21) as well as the electric power input(P_{EL}) of the manual machine tool (2) characterizing the actual operating state of the manual machine tool (2) by means of sensors in the form of sensorsignals,
- conduction of an adaptive process analysis based on the determined parameters in order to obtain parameter-specific, relevant characteristics,
- evaluation of the parameter-specific, relevant characteristics within the framework of a logical decision-making process in order to obtain information (PSM), which contains concrete information about the tool (21), the material hardness (M) of the currently machined object (3) as well as the pressure force (A) with which the manual machine tool (2)is driven into the object (3),and which characterizes the actual operating state,
- selection of known reference data (RD) of the utilized tool (21) as well of the material of the to-be-machined object (3) describing the operating state according to a given quality criterion,
- determination of an optimum operating point (OA)for the machine tool (2) determinable by the rotational speed (P_{D}) and percussion frequency (P_{S}) by comparison of the information (PSM) characterizing the actual operating state with the selected reference data (RD) and
- regulation of the manual machine tool (2) regarding the rotational speed and percussion frequency based on the determined optimum operating point (OA).

2. The method according to claim 1,
wherein the manual machine tool (2) is a percussion drilling machine which is rotary driven and percussion driven by at least one motor unit and the tool (21) is a drill bit or a drill head.

3. The method according to claim 1 or 2,
wherein in the adaptive process analysis the determined parameters (P) available as sensor signals are processed using a signalbased, modelbased and/or a knowledge-based process in such a manner that the parameter-specific, relevant characteristics obtained thereby are gathered in a characteristic vector (MV).

4. The method according to claim 3,
wherein a fuzzy-based limit value analysis (ST), trend analysis (TA) and/or spectral analysis or wavelet analysis is utilized as a signal-based process.

5. The method according to claim 4,
wherein a Kalman filter is utilized as the model-based process.

6. The method according to claim 5,
wherein an expert system is utilized as the knowledge-based process.

7. The method according to one of the claims 1 to 6,
**wherein** the parameter-specific, relevant characteristics gathered to a characteristic vector (MV) represent quantitative values which are transformed by means of the logical decision-making process into qualitative information in the form of a linguistic term which characterizes the actual operating state.

8. The method according to one of the claims 1 to 7,
wherein characteristic-based pattern recognition methods working on the basis of a neuro-fuzzy logic are utilized for the logical decision-making process.

9. The method according to one of the claims 1 to 8,
wherein the reference data (RD) in the form of non-linear families of characteristic curves available for selection are determined as a function of the rotational speed and the percussion frequency by means of empirical series of tests using different tools on different to-be-machined materials according to a fixed quality criterion.

10. The method according to claim 9,
wherein maximum boring progress, maximum borehole quality, minimum energy consumption or minimum mechanical strain for the human operative guiding the manual machine tool is utilized as the quality criterion.

11. The method according to one of the claims 1 to 10,
**wherein** the reference data (RD) are present in the form of look-up tables.

12. The method according to one of the claims 1 to 11,
wherein the comparison of the information (PSM) characterizing the actual operating state with the selected reference data (RD) is conducted to obtain the optimum operating point (OA) by means of forming minimum values respectively maximum values of the reference data (RD) present as a family of characteristic curves, in which comparison search algorithms and optimization algorithms are employed.

13. The method according to one of the claims 1 to 12,
wherein the regulation of the manual machine tool (2) is executed by a comparison of the parameters (P), with regard to the rotational speed (P_{D}) and the percussion frequency (P_{S}), characterizing the actual operating state of the manual machine tool (2) present in the form of sensor signals with the optimized operating point (OA), which is describable by an optimum rotational speed and an optimum percussion frequency, in that in the event a deviation is present, the rotational speed and the percussion frequency of the manual machine tool (2) is readjusted with regard to the optimum operating point (OA).

14. A device for optimized regulation of the operating state of a manually guidable machine tool (2), which operates according to the method according to one of the claims 1 to 13, having a tool (21) rotating with a rotational speed and percussion subjected to a percussion frequency is drivable, subjected to a force, into an object (3) consisting of a given material,
wherein sensors are provided on the manual machine tool (2), which determine in the form of sensor signals the rotational speed, the percussion frequency, a longitudinal acceleration, a transverse acceleration with regard to the tool (21) and/or an electric power input by the manual machine tool (2),
an evaluation unit is provided which evaluates the sensor signals based on a signal-based, model-based and/or knowledge-based process and provides relevant signal characteristics and which analyses the relevant signal characteristics on the basis of a logical decision-making process in such a manner that an information(PSM) characterizing the actual operating state of the manual machine tool (2) is obtainable, an optimizing unit is provided which determines the optimum rotational speed and the optimum percussion frequency based on empirically gained information and on information (PSM) characterizing the actual operating state of the manual machine tool(2) and
a comparing and regulating unit is provided which readjusts the manual machine tool (2) if the determined rotational speed and percussion frequency deviate from the determined optimum rotational speed and percussion frequency in order to obtain an optimized operating state.

## Revendications

1. Procédé d'optimisation destiné à la régulation pendant un processus de perçage, de l'état de fonctionnement d'une machine d'outillage à main (2) et à conduite manuelle, comprenant un outil (21) tournant à une vitesse de rotation donnée et soumis à une percussion réalisée selon une fréquence de percussion donnée au cours d'une séquence de perçage, du type selon lequel on actionne l'outil en le soumettant de plus à une force assurant la pénétration dudit outil dans un objet (3) composé d'un matériau donné, ledit procédé étant
**caractérisé par** la combinaison des étapes suivantes de procédé :
- enregistrement des paramètres caractérisant l'état de fonctionnement actuel de la machine d'outillage à main (2), à savoir la vitesse de rotation (P_{D}), la fréquence de percussion (P_{S}), les accélérations longitudinale et transversale (P_{LB}, P_{QB}), relatives à l'outil (21), ainsi que la puissance électrique (P_{EL}) reçue par la machine d'outillage à main, au moyen de capteurs sous forme de signaux de capteurs,
- exécution d'une analyse de processus avec auto-apprentissage, sur la base des paramètres enregistrés en vue de l'acquisition de caractéristiques pertinentes spécifiques aux paramètres,
- évaluation des caractéristiques pertinentes, spécifiques aux paramètres dans le cadre d'un processus logique de décision destiné à l'acquisition d'une information caractérisant l'état de fonctionnement actuel (PSM), qui contient un message relatif à l'outil (21), à la dureté du matériau (M) de l'objet (3) travaillé, ainsi qu'à la force de poussée (A), avec laquelle la machine d'outillage à main (2) pénètre dans l'objet (3),
- sélection de données de référence (RD) connues et décrivant l'état de fonctionnement de l'outil (21) employé, ainsi que du matériau de l'objet (3) à travailler en fonction d'un critère de qualité pré-défini,
- établissement pour la machine d'outillage à main (2) d'un point de travail optimal (OA), susceptible d'être déterminé par une vitesse de rotation (P_{D}) et une fréquence de percussion (P_{S}), par comparaison de l'information caractérisant l'état de fonctionnement actuel (PSM) avec les données de référence (RD) sélectionnées, et
- régulation de la machine d'outillage à main (2) en termes de vitesse de rotation et de fréquence de percussion, sur la base du point de travail optimal (OA) établi .

2. Procédé selon la revendication 1,
**caractérisé en ce que** la machine formant outillage à main (2) et à conduite manuelle est un marteau-piqueur qui est entraîné en rotation et en percussion par au moins une unité motorisée, et
**en ce que** l'outil (21) est un foret ou une tête de percement.

3. Procédé selon la revendication 1 ou 2,
**caractérisé en ce que** lors de l'analyse de processus avec auto-apprentissage, les paramètres (P) enregistrés et présents en tant que signaux de capteurs, sont traités selon un procédé de traitement de signal, de modélisation et /ou reposant sur des connaissances de savoir, de telle sorte que les caractéristiques spécifiques aux paramètres, pertinentes et obtenues soient réunies en un vecteur caractéristique (MV).

4. Procédé selon la revendication 3,
**caractérisé en ce qu'**on emploie en tant que procédé de traitement de signal une analyse de type fuzzy de valeur limite (ST), de tendance (TA) et/ou de spectre ou d'ondelettes.

5. Procédé selon la revendication 4,
**caractérisé en ce qu'**en tant que procédé reposant sur une modélisation on met en oeuvre un filtre Kalman.

6. Procédé selon la revendication 5,
**caractérisé en ce qu'**en tant que procédé reposant sur une modélisation on met en oeuvre un système expert.

7. Procédé selon l'une des revendications 1 à 6,
**caractérisé en ce que** les caractéristiques pertinentes, spécifiques aux paramètres et réunies en un vecteur caractéristique (MV) représentent des grandeurs quantitatives pertinentes, qui sont transformées par le processus logique de décision en une information qualitative sous la forme d'une expression dans un langage donné et qui caractérise l'état de fonctionnement actuel.

8. Procédé selon l'une des revendications 1 à 7,
**caractérisé en ce que** pour le processus logique de décision sont mises en oeuvre des méthodes de reconnaissance de modèles, basées sur des caractéristiques et travaillant sur la base d'une logique de type flou, désignée sous l'appellation « Neuro-fuzzy ».

9. Procédé selon l'une des revendications 1 à 8,
**caractérisé en ce que** les données de référence (RD) disponibles pour la sélection sous forme de champs caractéristiques non linéaires, qui sont fonction de la vitesse de rotation et de la fréquence de percussion, sont déterminées grâce à des séries d'essais empiriques avec différents outils sur différents matériaux à travailler, conformément à un critère fixé de qualité.

10. Procédé selon la revendication 9,
**caractérisé en ce qu'**en tant que critère de qualité on utilise l'avance maximale de perçage, la qualité maximale du trou de perçage, le besoin minimal en énergie ou la contrainte mécanique minimale pour un opérateur qui conduit la machine d'outillage à main.

11. Procédé selon l'une des revendications 1 à 10,
**caractérisé en ce que** les données de référence (RD) sont disponibles sous forme de tables de conversion.

12. Procédé selon l'une des revendications 1 à 11,
**caractérisé en ce que** la comparaison de l'information (PSM) caractérisant l'état de fonctionnement actuel avec les données de référence (RD) sélectionnées est réalisée en vue de l'acquisition du point de travail optimal (OA) par création de valeur minimale, respectivement maximale, pour les données de référence (RD) présentes en tant que champ caractéristique, pour lequel on applique des algorithmes de recherche et d'optimisation.

13. Procédé selon l'une des revendications 1 à 12,
**caractérisé en ce que** la régulation de la machine formant outillage à main (2) et à conduite manuelle est réalisée par une comparaison des paramètres (P) relatifs à la vitesse de rotation (P_{D}) et à la fréquence de percussion (P_{S}), caractérisant l'état de fonctionnement actuel de la machine formant outillage à main (2) et présents sous forme de signaux de capteurs, avec le point de travail optimisé (OA), qui est susceptible d'être décrit par une vitesse de rotation ainsi qu'une fréquence de percussion optimales, en ce sens que dans le cas d'une dérive existante sont régulées la vitesse de rotation et la fréquence de percussion de la machine formant outillage à main (2) par rapport au point de travail optimisé (OA).

14. Dispositif destiné à la régulation optimisée de l'état de fonctionnement d'une machine d'outillage à main (2) et à conduite manuelle, qui travaille selon le procédé selon l'une des revendications 1 à 13 et qui comprend un outil (21) tournant à une vitesse de rotation donnée, soumis à une percussion à une fréquence de percussion donnée et susceptible de pénétrer sous l'effet d'une force dans un objet (3) composé d'un matériau donné,
**caractérisé en ce que** des capteurs sont prévus sur la machine d'outillage à main (2) qui enregistrent sous forme de signaux de capteurs (P) la vitesse de rotation, la fréquence de percussion, une accélération longitudinale, une accélération transversale relatives à l'outil (21) et/ou une puissance électrique reçue par la machine d'outillage à main (2),
- **en ce qu'**une unité d'évaluation est prévue afin d'évaluer les signaux de capteurs en prenant pour base un procédé de traitement de signal, de modélisation et/ou reposant sur des connaissances de savoir et afin de mettre à disposition des caractéristiques pertinentes de signaux, ainsi que pour analyser les caractéristiques pertinentes de signaux en prenant pour base un processus logique de décision, de telle sorte qu'une information (PSM) caractérisant l'état de fonctionnement de la machine d'outillage à main (2) soit susceptible d'être obtenue,
- **en ce qu'**une unité d'optimisation est prévue afin de déterminer une vitesse de rotation ainsi qu'une fréquence de percussion optimales sur la base d'informations acquises de manière empirique et d'une information (PSM) caractérisant l'état de fonctionnement actuel de la machine d'outillage à main (2), et
- **en ce qu'**une unité de comparaison et de réglage est prévue afin réguler, en présence d'une dérive apparaissant entre la vitesse de rotation et la fréquence de percussion enregistrées et entre la vitesse de rotation et la fréquence de percussion optimales déterminées, la machine d'outillage à main (2) en vue de l'obtention d'un état de fonctionnement optimisé.
